## Europäisches Patentamt
## European Patent Office
## Office européen des brevets

(19)

(11) Veröffentlichungsnummer: **0 482 153 B1**

(12) **EUROPÄISCHE PATENTSCHRIFT**

(45) Veröffentlichungstag der Patentschrift: **02.08.95**

(51) Int. Cl.⁶: **B23Q 7/14**

(21) Anmeldenummer: **91908356.8**

(22) Anmeldetag: **26.04.91**

(86) Internationale Anmeldenummer:
**PCT/DE91/00350**

(87) Internationale Veröffentlichungsnummer:
**WO 91/17020 (14.11.91 91/26)**

(54) **TRANSPORTVORRICHTUNG.**

(30) Priorität: **08.05.90 DE 4014701**

(43) Veröffentlichungstag der Anmeldung:
**29.04.92 Patentblatt 92/18**

(45) Bekanntmachung des Hinweises auf die
Patenterteilung:
**02.08.95 Patentblatt 95/31**

(84) Benannte Vertragsstaaten:
**CH DE FR GB LI**

(56) Entgegenhaltungen:
EP-A- 0 285 527
AT-B- 323 644
AT-B- 341 423
DE-A- 3 621 937
US-A- 4 137 984

(73) Patentinhaber: **ROBERT BOSCH GMBH**
**Postfach 30 02 20**
**D-70442 Stuttgart (DE)**

(72) Erfinder: **MAIER, Gernot**
**Rommelshauserstr. 73**
**D-7000 Stuttgart 50 (DE)**
Erfinder: **UTZ, Rainer**
**Hausweinberg 38**
**D-7050 Waiblingen (DE)**
Erfinder: **KOLLEK, Hans-Jochen**
**Robert-Koch-Str. 1**
**D-7132 Illingen (DE)**
Erfinder: **ERNE, Hans**
**Kornblumenstr. 15**
**D-7050 Waiblingen 7 (DE)**
Erfinder: **SCHRAMM, Jochen**
**Schmidbergstr. 4**
**D-7100 Heilbronn (DE)**
Erfinder: **SCHMID, Thomas**
**Friedrichstr. 108**
**D-7140 Ludwigsburg (DE)**
Erfinder: **REITMEIER, Stefan**
**Wirtembergstr. 3**
**D-7050 Waiblingen-Hohenacker (DE)**
Erfinder: **MÜLLER, Ulrich**
**Neustädter Str. 30**
**D-7054 Korb (DE)**

**Beschreibung**

Die Erfindung betrifft eine Transportvorrichtung mit selbstfahrenden Werkstückträgern in Form eines Wagens, Schlittens oder dergleichen, wie im Oberbegriff der Patentansprüche 1 und 2 angegeben. Eine solche ist bekannt beispielsweise aus der EP-OS 0 285 527. Die bekannte Vorrichtung umfaßt ein Schienennetz, auf dem sich autonome Wagen bewegen. Die Wagen führen jeweils einen eigenen Antrieb und eine eigene Energiequelle mit sich. Entlang des Schienennetzes sind Stationen angeordnet, an denen vom Wagen transportierte Werkstücke bearbeitet werden. Jeder Wagen ist mit mehreren Sensoren und Schaltern ausgerüstet, über welche dem Wagen durch in der Fahrbahn angeordnete Signalgeber Fahrtsteuerbefehle übermittelt werden. An der Frontseite ist ein nach vorne gerichteter optischer Abstandssensor angeordnet. Im Wagenboden befindet sich ein Induktivsensor, der durch auf der Fahrbahn angebrachte Signalstreifen angesprochen wird. Desweiteren befindet sich an der Wagenbodenseite ein mechanischer Schalter, der durch in der Fahrbahn angeordnete Sperren betätigt wird. Ein weiterer, in Form einer Wippe ausgebildeter Schalter befindet sich an der Frontseite des Wagens. Durch dieses Sensor-Schaltersystem erfolgt im Normalbetrieb die gesamte Fahrsteuerung eines Wagens. Ein Wagen fährt, sofern kein anderes Steuersignal vorliegt, mit maximaler Antriebsleistung. Vor Stoppstellen sind auf der Fahrbahn Signalstreifen aufgebracht. Der Wagen leitet nach Erkennen des Signalstreifens durch den bodenseitigen Induktivsensor einen Bremsvorgang ein, durch den die Wagengeschwindigkeit auf eine minimale Restgeschwindigkeit herabgesetzt wird. Mit dieser Schleichgeschwindigkeit erreicht er den Anhaltepunkt, wo er durch Betätigen des bodenseitigen Schalters mittels einer in der Fahrbahn angeordneten Sperre stillgesetzt wird. Nach Aufheben der Sperre setzt der Wagen seine Fahrt wieder mit maximaler Leistung fort. Erkennt der Abstandssensor ein Hindernis oder einen vorausfahrenden Wagen, bremst der Wagen ebenfalls auf Schleichgeschwindigkeit ab. Ist das Hindernis unbeweglich, trifft er mit der Schleichgeschwindigkeit auf das Hindernis. Durch den Aufprall wird dann die frontseitige Wippe betätigt und der Wagen hierdurch stillgesetzt. Wird das Hindernis entfernt und/oder entfällt der Druck auf die Frontwippe, nimmt der Wagen seine Fahrt mit voller Leistung wieder auf. Das Sensor-Schaltersystem ermöglicht in eingeschränkter Weise eine Steuerung des Wagens auch in nicht regulären Betriebssituationen, beispielsweise im Falle eines auf der Fahrbahn befindlichen Hindernisses. Dieses wird vom Abstandssensor erkannt, der daraufhin einen Bremsvorgang einleitet. Der Wagen prallt mit Schleichgeschwindigkeit auf das Hindernis auf und wird durch die dabei betätigte Frontwippe stillgesetzt.

Ist allerdings der Abstandssensor defekt, oder erkennt er das Hindernis aus anderen Gründen nicht, erfolgt der Aufprall auf das Hindernis mit voller Geschwindigkeit. Er wird auch in diesem Fall durch Betätigung der Frontwippe stillgesetzt. Die Weiterfahrt erfolgt wieder bei Wegfall der Druckkraft auf die Frontwippe. Dies kann bei beweglichen Hindernissen zur Folge haben, daß der Wagen das Hindernis ruckweise vor sich her stößt, ohne endgültig stillgesetzt zu werden. Ist in gleicher Situation der Abstandssensor funktionstüchtig, dagegen die Frontwippe defekt, hat dies ein "Gegenanfahren" gegen das Hindernis zur Folge wobei der Wagen ständig versucht, die Schleichgeschwindigkeit zu erreichen. Bei schweren oder nahezu unbeweglichen Hindernissen kann dies leicht zu einer Motorüberlastung fuhren. Für einen Menschen ergibt sich eine erhöhte Unfallgefahr, wenn etwa eine Hand durch einen Wagen mit defektem Abstandssensor eingeklemmt wird. Ist andererseits bei einem Wagen der bodenseitige Induktivsensor defekt, so führt dies dazu, daß der Wagen mit maximaler Geschwindigkeit in einen Anhaltepunkt einfahrt, wo er durch Betätigen des bodenseitigen Schalters abrupt stillgelegt wird. Nach Wegfall der Stoppsperre setzt der Wagen seine Fahrt mit maximaler Leistung fort und fährt in gleicher Weise, das heißt, mit maximaler Geschwindigkeit in die nächste Stoppstelle ein. Die Fehlerhaftigkeit des Bodeninduktivsensors wird dabei nicht entdeckt.

Es ist Aufgabe der vorliegenden Erfindung, die Sicherheit einer solchen Transportvorrichtung zu erhöhen.

Vorteile der Erfindung

Die Aufgabe wird erfindungsgemäß mit den kennzeichnenden Merkmalen der beiden unabhängigen Ansprüche 1 und 2 gelöst. Der Vorteil der erfindungsgemäßen Transportvorrichtung gemäß Anspruch 1 besteht darin, daß eine vom zeitlichen Ablauf her nicht mögliche Signalfolge detektiert wird und dementsprechend der Wagen stillgesetzt wird. Beispielsweise werden Wagen, die wegen eines defekten Bodeninduktivsensors ungebremst in eine Stoppstelle einfachen, sofort dauerhaft stillgesetzt. Der Vorteil der erfindungsgemäßen Transportvorrichtung gemäß Anspruch 2 besteht darin, daß überwacht wird, wenn in einem vorgegebenen Zeitintervall die aus der Batterie entnommene Energie einen vorgegebenen Grenzwert übersteigt. Dadurch wird der Motor des Wagens vor Zerstörung geschützt.

Zeichnung

Erfindungsgemäße Transportvorrichtungen sind in der Zeichnung dargestellt und werden im folgenden näher erläutert. Es zeigen Figur 1 einen Aufbau eines Wagens mit einem Ausschnitt einer zugehörigen Fahrbahn, Figur 2 die Einfahrt eines Wagens in eine freie Stoppstelle, Figur 3 die Einfahrt eines Wagens in eine von einem anderen Wagen bereits besetzte Stoppstelle, Figur 4 einen Aufbau eines Front-Schalters, Figur 5 einen Aufbau einer Energieentnahmeüberwachungsanordnung und Figur 6 einen Verlauf einer Energieentnahmekurve.

Beschreibung der Ausführungsbeispiele

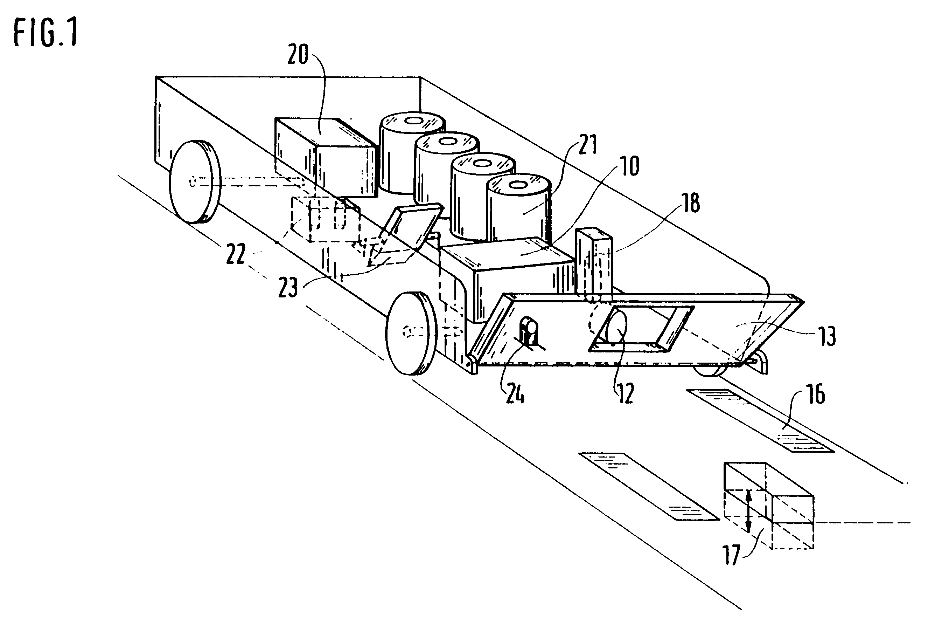

Die erfindungsgemäße Transportvorrichtung enthält ein verzweigbares Schienennetz mit daran angeordneten Bearbeitungsstationen und autonomen Werkstückträgern, im folgenden Wagen genannt, welche sich auf dem Schienennetz bewegen. Einen Wagen mit einem Fahrbahnausschnitt zeigt schematisch Figur 1. Fahrtbefehle werden dem Wagen über Sensoren 12, 18, 22 und Schalter 23, 12 zugeführt. Die Wagen sind dazu mit einem in Fahrtrichtung gerichteten Abstandssensor 12, einem frontseitig angebrachten Druckschalter 13 in Form einer Wippe, sowie bodenseitig mit einem Induktivsensor 18, einem Bahnsensorenpaar 22 und einem bodenseitigen Stoppschalter 23 ausgerüstet. Die wagenseitigen Schalter 13, 23 und Sensoren 12, 18, 22 werden durch in der Fahrbahn angeordnete Signalgebervorrichtungen 16, 17 bzw. durch Aufprall aktiviert. Jeder Wagen ist mit einer zentralen Steuereinheit in Form eines Mikrorechners 10 ausgerüstet der die Koordination aller über die Sensoren und Schalter eingehenden Signale vornimmt und die gesamte Fahrsteuerung eines Wagens durchführt. Der Mikrorechner 10 ist dazu mit allen aktiven Wagenelementen verbunden wie Antrieb, Sensoren, Schalter, usw.

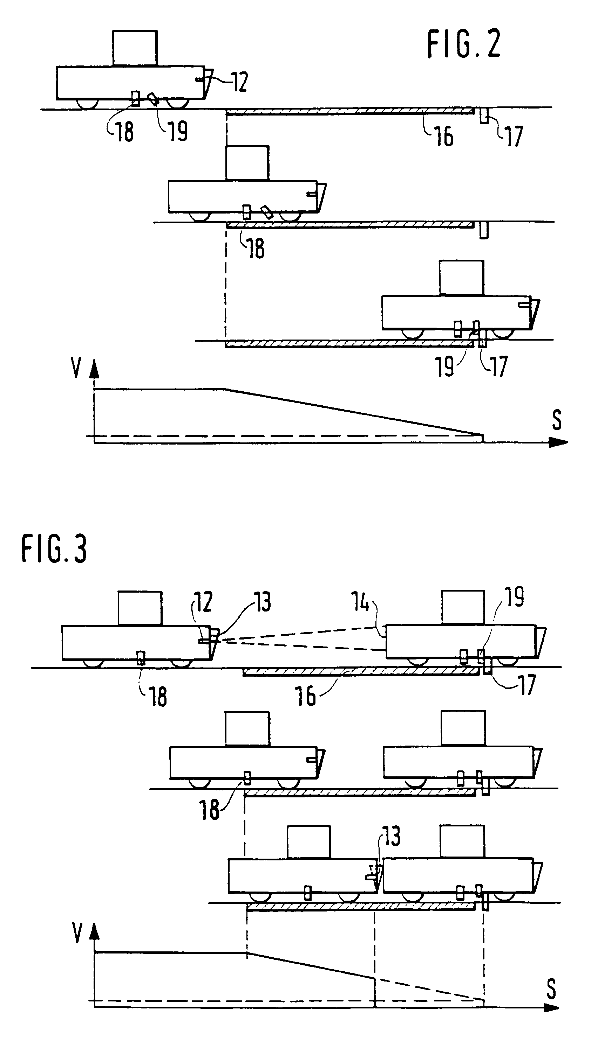

Eine Stoppstelle besteht aus einem auf der Fahrbahn aufgebrachten Signalstreifen 16, an dessen Ende sich eine von außen steuerbare mechanische Sperre 17 befindet, die den Anhaltepunkt markiert. Die Länge der Signalstreifen 16 ist vor allen Anhaltepunkten gleich. Der Wert der Signalstreifenlänge ist im Mikrorechner 10 gespeichert. Das Einfahren eines Wagens in eine freie Stoppstelle zeigt Figur 2.

Zunächst erkennt der am Boden angeordnete Induktivsensor 18 beim Überfahren den Signalstreifen 16 und gibt ein Signal an den Mikrorechner 10 ab. Der Mikrorechner 10 bremst daraufhin bei bekannter Länge des Signalstreifens 16 den Wagen zielgenau auf den Anhaltepunkt. Am Ende des Signalstreifens 16 wird durch die mechanische Sperre 17 der bodenseitige Schalter 19 betätigt, der ein Signal an den Mikrorechner 10 abgibt, welcher daraufhin den Wagen stillsetzt. Zur Verdeutlichung ist ein möglicher Verlauf der Geschwindigkeit über dem Bremsweg bei einem solchen regulären Anhaltevorgang in einem Diagramm dargestellt. Aufgetragen sind als Abszisse die zurückgelegte Wegstrecke S, sowie als Ordinate die Geschwindigkeit V. Der reale Verlauf der Kurve kann von dem Gezeigten selbstverständlich abweichen, er muß insbesondere nicht linear sein. Das Einfahren in eine bereits mit einem anderen Wagen besetzte Stoppstelle zeigt Figur 3. In diesem Fall erkennt zunächst der Abstandssensor 12 das Heck 14 des in der Stoppstelle stehenden Wagens als Hindernis und löst damit einen Bremsvorgang aus, durch den die Wagengeschwindigkeit auf einen dem Abstand entsprechenden Wert herabgesetzt wird. Beim Passieren des Signalstreifenanfangs spricht der bodenseitige Induktivsensor 18 an. Der Wagen bremst daraufhin zielgenau auf das Heck 14 des in der Stoppstelle stehenden zweiten Wagens. Beim Auftreffen auf den stehenden Wagen, das mit einer minimalen Restgeschwindigkeit erfolgt, wird die frontseitige Wippe 13 betätigt und der auffahrende Wagen daraufhin stillgesetzt. Ein beispielhafter Verlauf der Geschwindigkeit über dem Weg in diesem Fall ist anhand eines Diagramms dargetellt. Es sind mit S die zurückgelegte Wegstrecke, mit V die Geschwindigkeit des Wagens bezeichnet.

Arbeitet der Abstandssensor 12 fehlerhaft oder funktioniert überhaupt nicht und steht bereits ein Wagen in einer Stoppstelle, wie in Figur 3 gezeigt, so wird der Bremsvorgang nicht durch Ansprechen Abstandsensors 12 sondern durch Aktivierung des Bodeninduktivsensors 18 ausgelöst. Dieser gibt an den Mikrorechner 10 ein Signal ab, welches eine freie Stoppstelle signalisiert. Fehlt ein zusätzliches Signal vom Abstandssensor 12, welches ein Hindernis signalisiert, führt der Mikrorechner 10 den Bremsvorgang zielgenau auf den durch die Sperre 17 markierten Anhaltepunkt durch. Der Wagen trifft deshalb mit nicht ausreichend abgebremster Geschwindigkeit auf das Heck 14 des stehenden Wagens, wo er durch die beim Aufprall betätigte frontseitige Wippe 13 stillgesetzt wird.

Um einen solchen scharfen Aufprall zu vermeiden, überprüft eine in jedem Wagen vorhandene Signalauswertelogik die zeitliche Abfolge des Ansprechens der Sensoren bzw. Schalter. Die Signalauswertelogik ist zweckmäßig im Mikrorechner 10 realisiert. Im Falle des Ausführungsbeispiels gemäß Figur 3, lautet die reguläre Ansprechabfolge der Sensoren und Schalter: Abstandssensor 12 - Bodenseitiger Induktivsensor 18 - Frontseitige Wippe 13. Die aufgrund einer fehlerhaften Sensorfunktion erhaltene Abfolge lautet:

Bodeninduktivsensor 18 - frontseitige Wippe 13. Gegenüber der Sequenz für das normale Einfahren in eine Stoppstelle fehlt beim Einfahren mit einem gestörten Abstandssensor 12 das Signal für das Ansprechen des Abstandssensors 12. Durch Vergleich mit der regulären Sequenz, die im Mikrorechner 10 abgespeichert ist, erkennt der Mikrorechner 10, daß eine Wagenfunktion fehlerhaft ist . Der Mikrorechner 10 gibt daraufhin ein Fehlersignal ab und setzt den Wagen still beziehungsweise vereinzelt ihn an einer geeigneten Stelle.

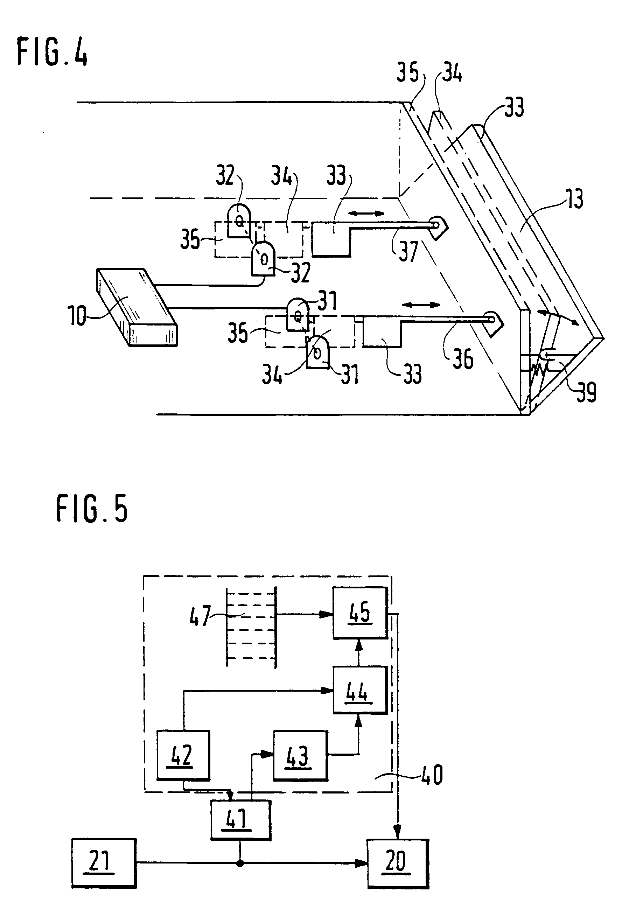

Zur Stillsetzung eines Wagens, insbesondere nach Aufprall auf Hindernisse dienen weitere Vorrichtungen. Der als Wippe 13 ausgebildete frontseitige Schalter ist vorteilhaft zweistufig ausgeführt. Der erste Zustand, Position 34 in Figur 4, wird durch einen regulären Aufprall betätigt, etwa wenn ein Wagen in einer Stoppstelle mit Schleichgeschwindigkeit auf einen anderen, bereits in der Stoppstelle stehenden Wagen auffährt. Der Schalter gibt dann ein Signal an die Steuereinheit 10 ab, aufgrund dessen diese den Wagen vorübergehend stillsetzt. Entfällt der Druck auf die Wippe 13 wieder, kehrt die Wippe in die Ausgangslage 33 zurück. Das der Wippenposition 32 entsprechende Signal entfällt damit ebenfalls, woraufhin die Steuereinheit 10 den Wagen wieder in Bewegung setzt.

Der zweite Schaltzustand, Position 35, wird bei nicht regulärem Aufprall betätigt. Ein solcher Fall tritt beispielsweise auf, wenn ein Wagen infolge eines nicht funktionierenden Abstandssensors mit maximaler Geschwindigkeit ungebremst auf ein in der Fahrbahn befindliches Hindernis auffährt, dies kann beispielsweise ein anderer stehender Wagen sein. Durch einen so bedingten harten Aufprall wird die zweite Schalterstufe betätigt. Aufgrund des dabei an die Steuereinheit 10 abgegebenen Signales wird der Wagen dauerhaft stillgesetzt. Zur Reaktivierung ist dann ein äußerer Stelleingriff erforderlich. Die zweistufige Schaltanordnung ist vorzugsweise mittels Licht schranken 31, 32 und eines Federdämpfersystems 39 realisiert. Ein Ausführungsbeispiel hierfür zeigt Figur 4. Mit der Frontwippe 13 fest verbunden sind zwei unterschiedlich lange Unterbrecherstäbe 36, 37. Die Wippe ist über ein Federdämpfersystem 39 dynamisch an den Wagen gekoppelt. Die Enden der Unterbrecherstäbe 36, 37 sind zwischen zwei fest auf dem Wagen, in gleichem Abstand zur Frontwippe montierte Lichtschranken 31, 32 geführt. Beide Lichtschranken 31, 32 sind mit der Steuereinheit 10 verbunden. In Ausgangs-Stellung 33 unterbrechen beide Unterbrecherstäbe 36, 37 die ihnen zugeordneten Lichtschranken 31, 32 nicht. Wird die Wippe 13 durch Druck betätigt, schiebt sich bei leichtem Druck der längere Unterbrecherstab 36 zwischen die Lichtschranke 32 und unterbricht diese. Die dem kürzeren Unterbrecherstab 37 zugeordnete Lichtschranke 31 wird nicht unterbrochen. Erst bei großem Druck infolge eines sehr harten Aufpralls wird der kürzere Unterbrecherstab 37 soweit horizontal verschoben, daß er die ihm zugeordnete Lichtschranke 31 unterbricht. Das von der Lichtschranke 31 abgegebene Signal löst in diesem Fall eine dauerhafte Wagenstillsetzung aus.

Weiterhin ist ein Schocksensor 24 vorgesehen, der ebenfalls bei einem nicht regulär harten Aufprall anspricht und ein Signal abgibt, aufgrund dessen der Mikrorechner 10 den Wagen dauerhaft stillsetzt. Ein Schwellwert für die Wucht eines Aufpralls, bei dessen Überschreitung der Schocksensor 24 anspricht, kann von außen vorgegeben werden. Zweck des Schocksensors 24 ist es, in solchen Fällen eine dauerhafte Wagenstillsetzung auszulösen, in denen ein auf der Fahrbahn befindliches Hindernis vom Abstandssensor 12 nicht erkannt wird und die Frontwippe 13 nicht anspricht. Dieser Fall kann vorliegen, wenn sich ein Hindernis oberhalb der Wippe 13 befindet und nur die auf einem Wagen befindliche Zuladung trifft. Es kann natürlich vorkommen, daß sowohl die frontseitige Wippe 13 als auch der Schocksensor 24 bei Aufprall auf ein Hindernis Ansprechen.

Als weitere Schutzeinrichtung ist eine Energieentnahmeüberwachungsanordnung 40 vorgesehen zur Überwachung der aus der Batterie entnommene Leistung. Bringt ein wagen über einen differentiellen Zeitraum hinaus eine große Leistung auf, ohne daß sich die Wagengeschwindigkeit entsprechend ändert, setzt der Mikrorechner 10 den Wagen still. Diese Situation kann vorliegen, wenn ein Wagen gegen ein flaches bewegliches Hindernis fährt. Er wird in diesem Fall weder durch Betätigung der frontseitige Wippe 13 noch durch Ansprechen des Schocksensors stillgesetzt. Der Wagen versucht deshalb mit maximaler Leistung die Sollgeschwindgkeit zu erreichen. Die Struktur einer solchen Anordnung ist in Figur 5 vereinfacht dargestellt. Die Energieentnahmeüberwachungsanordnung 40 besteht aus einer Strommeßvorrichtung 41 und einer im Mikrorechner 10 realisierten Signalverarbeitung 42-46. Die Srommeßvorrichtung 41 ist mit dem motorseitigen Ausgang der Batterien verbunden. Das Ausgangssignal der Strommeßvorrichtung wird als Energiesignal der Auswerteeinheit 40 zugeführt. Die Energieentnahmeüberwachungsanordnung 40 ist ausgangsseitig mit dem Antrieb 20 verbunden.

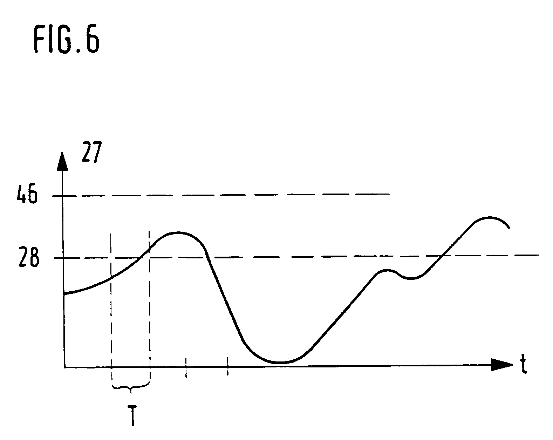

Die von der Batterie 21 an den Antrieb 20 abgegebene Leistung ist proportional zu $I^2t$, wobei I den Strom, t die Zeit repräsentiert. Die Energieentnahmeüberwachungsanordnung 40 enthält deshalb einen Strommesser 41, der den mittleren Stromfluß von der Batterie 21 zum Motor 20 erfaßt und ein entsprechendes elektrisches Signal erzeugt. Dieses Signal wird einem Quadrierer 43 zugeführt. Die zeitliche Dauer T einer vom Strommesser vorgenommenen Strommessung wird von einer Zeitsteuerung 42 festgelegt. In einem Multiplizierer 44 wird das quadrierte, vom Strommesser 41 kommende Signal mit einem von der Zeitsteuerung abgegebenen, der Zeit T entsprechenden Signal multipliziert. Das so erhaltene Ergebnis entspricht der in einem Zeitraum T aus der Batterie entnommenen Energie. Ein Vergleicher 45 vergleicht dieses Ergebnis mit einem vorgegebenen, in einem Speicher 47 abgelegten Grenzwert 46. Übersteigt der im Multiplizierer gebildete Wert den Grenzwert 46, gibt die Energieentnahmeüberwachungsanordnung 40 ein Signal an den Antrieb 20 ab, woraufhin der Wagen dauerhaft stillgesetzt wird. Die Zeit T und der Grenzwert 46 sind im allgemeinen feste Werte, die in der Auswerteeinheit 40 gespeichert sind. Sie werden abhängig vom Betriebsanforderungsprofil und vom jeweiligen Motor des Wagens festgelegt. Die Festlegung der beiden Werte erfolgt dabei zweckmäßig aufgrund einer typischen, über einen längeren Zeitraum während des regulären Betriebes aufgenommenen Energieentnahmekurve, wie in Figur 6 gezeigt. Darin ist über der Zeit t die Größe $I^2$ - mit 27 bezeichnet - aufgetragen. Ferner sind beispielhaft ein Zeitintervall T, eine dem mittleren Strom entsprechende Linie 28 sowie eine mögliche den Grenzwert 46 entsprechende Linie.

Die Werte T und der Grenzwert 46 können dann beispielsweise aufgrund der Beziehung $P \approx \Sigma^n \; i^2 T / n_2 - n_1$ festgelegt werden. Darin bedeuten: P die mittlere Verlustleitung im Intervall $(n_2 - n_1)$, I den mittleren Strom, i den mittleren Strom in einem Meßintervall T, T ein Zeitintervall, $n_2$, $n_1$ die Nummern der an Anfang und Ende des Gesamtzeitraums, über den gemittelt wird, liegenden Zeitintervalle. T wird zweckmäßig so gewählt, daß typisch kurzzeitige Überlastungen nicht zur Wagenstillsetzung führen. Der Grenzwert 46 sollte ausreichend über dem Wert P liegen, so daß betriebstypische Leistungsschwankungen nicht zur Stillsetzung des Wagens führen. Die vorgeschagene Realisierung der Energieentnahmeüberwachungsanordnung 40 ist exemplarisch. Sie kann selbstverständlich, zumal ein bedeutender Teil der Schaltung in Form von Software realisiert ist, bei gleicher Funktionsweise auch anders aufgebaut sein.

Von besonderem Vorteil ist es, die beschriebenen Vorrichtungen gemeinsam vorzusehen. Die Kombination der Vorrichtungen stellt einerseits einen Schutz des Wagens dar für den Fall, daß der Abstandssensor 12 nicht einwandfrei arbeitet. Dies kann beispielsweise auch durch Verschmutzung des Sensors bedingt sein. Andererseits tritt im Normalbetrieb einer Transportvorrichtung mit gleicher Wahrscheinlichkeit eine Vielzahl unterschiedlicher nichtregulärer Betriebszustände auf, die nur mittels einer Kombination der Vorrichtungen insgesamt erfaßt werden können. Hierunter fallen insbesondere verschiedenartige Hindernisse. So ist zu unterscheiden zwischen weichen und harten, zwischen flachen und hohen, zwischen beweglichen und unbeweglichen, sowie zwischen leichten und schweren Hindernissen. Von diesen werden beispielsweise flache oder von oben hereinragende Hindernisse weder vom Abstandssensor 12 erkennt noch wird bei Auflaufen des Wagens auf ein solches Hindernis frontseitige Wippe 13 betätigt, wenn diese in Höhe des Wagenbodens gelagert ist. Ist zusätzlich das Hindernis unbeweglich, spricht beim Aufprall der Schocksensor 24 an und. Ist das Hindernis beweglich, spricht dagegen die Energieentnahmeüberwachungsanordnung 40 an, in jedem Fall wird der Wagen stillgesetzt. Befindet sich in einem weiteren Beispiel ein weiches Hindernis auf der Fahrbahn und ist der Abstandssensor 12 verschmutzt und arbeitet deshalb nicht, so sprechen zwar weder der Schocksensor 24 noch die frontseitige Wippe 13 an. Jedoch wird der Wagen durch Ansprechen der Energieentnahmeüberwachungsanordnung 40 stillgesetzt.

Gerät, in einem weiteren Beispiel, ein hartes, unbewegliches Hindernis plötzlich auf die Fahrbahn und ist die frontseitige Wippe 13 defekt, so spricht beim Aufprall auf das Hindernis der Schocksensor an und setzt den Wagen still. Da es für den Betrieb von besonderer Bedeutung ist, einen eventuellen Defekt des Abstandssensors 12 möglichst schnell zu erkennen, ist es vorteilhaft, zusätzlich in jedem Fall eine Signalauswertelogik vorzusehen. Ist nämlich der Abstandssensor 12 defekt, so ist ein Wagen zwar durch die weiteren Sicherheitsvorrichtungen geschützt, jedoch kann ein Defekt des Abstandssensor nicht mit Sicherheit zugeordnet werden.

**Patentansprüche**

1. Transportvorrichtung, mit wenigstens einem autonomen Werkstückträger in Form eines Wagens mit einem elektrischen Antrieb (20) und eigener Antriebssteuerung, sowie mit einem verzweigbaren Wegsystem mit daran angeordneten Stationen, insbesondere Lade-, Kontroll- und/oder Bearbeitungsstationen, dadurch gekennzeichnet, daß die Antriebssteuerung des Wagens eine signalverarbeitenden Anlage (10) aufweist, welche Mittel zur Erfassung von Steuersignalen, Mittel zum Speichern von vorgegebenen Steuersignalen und Mittel zum Vergleich der erfaßten Steuersignale mit den vorgegebenen Steuersignalen enthält, und daß die Mittel zur Erfassung der Steuersignale die zeitliche Reihenfolge der dem Wagen über Sensoren (12, 18, 22) und/oder Schaltmittel (13, 23) zugeführten Steuersignale aufnehmen und die Mittel zum Vergleich der Steuersignale die erfaßten Steuersignale auf logische Plausibilität hin überprüfen und , wenn Signale in einer vom Ablauf nicht sinnvollen Reihenfolge auftreten, den Wagen stillsetzen.

2. Transportvorrichtung, mit wenigstens einem autonomen Werkstückträger in Form eines Wagens mit einem elektrischen Antrieb (20), einer Batterie (21) und eigener Antriebssteuerung, sowie mit einem verzweigbaren Wegsystem mit daran angeordneten Stationen, insbesondere Lade-, Kontroll- und/oder Bearbeitungsstationen, dadurch gekennzeichnet, daß die Antriebssteuerung des Wagens eine signalverarbeitenden Anlage (10) aufweist, welche Mittel zur Erfassung von Steuersignalen, Mittel zum Speichern von vorgegebenen Steuersignalen und Mittel zum Vergleich der erfaßten Steuersignale mit den vorgegebenen Steuersignalen enthält, und daß die Mittel zur Erfassung der Steuersignale eine Energieentnahmeüberwachungsanordnung (40) enthalten, welche die in einem vorgegebenen Zeitintervall aus der Batterie (21) entnommene Energie mit einem vorgegebenen Grenzwert (46) vergleicht und ein Signal an die signalverarbeitende Anlage (10) abgibt, wenn die entnommene Energie den Grenzwert (46) übersteigt.

3. Transportvorrichtung nach Anspruch 2, dadurch gekennzeichnet, daß die signalverarbeitende Anlage (10) den Wagen stillsetzt, wenn die Energie den Grenzwert (46) übersteigt.

4. Transportvorrichtung nach Anspruch 2, dadurch gekennzeichnet, daß eine Strommeßvorrichtung (41) vorgesehen ist, die mit dem motorseitigen Ausgang der Batterie (21) verbunden ist und den mittleren Stromfluß von der Batterie (21) zum Motor (20) erfaßt, und daß die Strommeßvorrichtung (41) als Ausgangssignal ein Energiesignal der Energieüberwachungsanordnung (40) zuführt.

5. Transportvorrichtung nach Anspruch 4, dadurch gekennzeichnet, daß die Energieentnahmeüberwachungsanordnung (40) einen Quadrierer (43), eine Zeitsteuerung (42), einen Multiplizierer (44), einen Vergleicher (45) und einen Speicher (47) enthält, wobei der Quadrierer (43) das Ausgangssignal der Strommeßvorrichtung (41) quadriert und dem Multiplizierer (44) zuführt, welcher das Ausgangssignal des Quadrierers (43) mit dem von der Zeitsteuerung (42) gelieferten Signal (T) multipliziert und das multiplizierte Signal (T) dem Vergleicher (45) zuführt, welcher dieses Signal mit mindestens einem im Speicher abgelegten Grenzwert vergleicht.

## Claims

1. Transport device, having at least one autonomous workpiece carrier in the form of a trolley with an electrical drive (20) and its own drive control system, as well as having a branched track system with stations, especially loading, monitoring and/or processing stations, arranged thereon, characterized in that the drive control system of the trolley has a signal-processing system (10), which contains means for acquiring control signals, means for storing predetermined control signals and means for comparing the acquired control signals with the predetermined control signals, and in that the means for acquiring the control signals pick up the time order of the control signals fed to the trolley via sensors (12, 18, 22) and/or switching means (13, 23), and the means for comparing the control signals check the acquired control signals for logical plausibility and stop the trolley if signals occur in an order which is not meaningful in terms of the sequence.

2. Transport device, having at least one autonomous workpiece carrier in the form of a trolley with an electrical drive (20), a battery (21) and its own drive control system, as well as having a branched track system with stations, especially loading, monitoring and/or processing stations, arranged thereon, characterized in that the drive control system of the trolley has a signal-processing system (10), which contains means for acquiring control signals, means for storing predetermined control signals and means for comparing the acquired control signals with the predetermined control signals, and in that the means for acquiring the control signals contain an energy removal monitoring arrangement (40), which compares the energy removed from the battery (21) in a predetermined time interval with a predetermined limiting value (46) and transmits a signal to the signal-processing system (10), if the energy removed exceeds the limiting value (46).

3. Transport device according to Claim 2, characterized in that the signal-processing system (10) stops the trolley if the energy exceeds the limiting value (46).

4. Transport device according to Claim 2, characterized in that a current measuring device (41) is provided, which is connected to the motor-side output of the battery (21) and acquires the average current flow from the battery (21) to the motor (20), and in that the current measuring device (41) feeds, as output signal, an energy signal to the energy monitoring arrangement (40).

5.  Transport device according to Claim 4, characterized in that the energy removal monitoring arrangement (40) contains a squaring device (43), a time controller (42), a multiplication device (44), a comparator (45) and a memory (47), the squaring device (43) squaring the output signal from the current measuring device (41) and feeding it to the multiplication device (44), which multiplies the output signal from the squaring device (43) by the signal (T) supplied by the time controller (42) and feeds the multiplied signal (T) to the comparator (45), which compares this signal with at least one limiting value stored in the memory.

**Revendications**

1.  Système de transport comprenant au moins un porte-pièces en forme de chariot à entraînement électrique (20) et commandé individuellement, se déplaçant sur un système de voies avec embranchements et stations, notamment de chargement, de contrôle et/ou d'usinage, caractérisé en ce que :
    - la commande de l'entraînement de chariot comporte une installation de traitement de signaux (10) comprenant des moyens de réception des signaux de commande, des moyens de mise en mémoire de signaux de commande donnés à l'avance, des moyens de comparaison des signaux reçus et des signaux mis en mémoire,
    - les moyens de réception des signaux de commande reçoivent les signaux de commande se succédant dans le temps adressés au chariot par des détecteurs (12, 18, 22) et/ou des contacteurs (13, 23),
    - les moyens de comparaison des signaux de commande procèdent à l'examen des signaux perçus sur le plan de leur vraisemblance logique et, si les signaux ne se succèdent pas correctement, mettent le chariot au repos.

2.  Système de transport comprenant au moins un porte-pièces en forme de chariot à entraînement électrique (20) et commandé individuellement, se déplaçant sur un système de voies avec embranchements et stations, notamment de chargement, de contrôle et/ou d'usinage, caractérisé en ce que :
    - la commande de l'entraînement de chariot comporte une installation de traitement de signaux (10) comprenant des moyens de réception des signaux de commande, des moyens de mise en mémoire de signaux de commande donnés à l'avance, des moyens de comparaison des signaux de commande reçus et des signaux de commande donnés à l'avance,
    - les moyens de perception des signaux de commande comprennent un système de surveillance (40) de l'énergie consommée, qui compare, à l'intérieur d'un intervalle de temps donné, l'énergie (21) consommée provenant de la batterie, à une valeur limite (46) et envoie un signal à l'installation de traitement des signaux (10) si l'énergie consommée dépasse la valeur limite (46).

3.  Système de transport selon la revendication 2, caractérisé en ce que l'installation de traitement du signal (10) met le chariot au repos lorsque l'énergie dépasse la valeur limite (46).

4.  Système de transport selon la revendication 2, caractérisé en ce qu'il comporte un dispositif de mesure du courant (41) relié à la sortie de la batterie (21) du côté du moteur et qui mesure l'intensité moyenne du courant entre la batterie (21) et le moteur (20), ce dispositif (41) délivrant au système de surveillance (40) un signal de sortie représentatif de l'énergie consommée.

5.  Système de transport selon la revendication 4, caractérisé en ce que le système de surveillance de l'énergie consommée (40) comprend un quadrateur (43), une commande de temps (42), un multiplicateur (44), un comparateur (45) et une mémoire (47), le quadrateur (43) élevant au carré le signal sortant du dispositif de mesure (41) et l'adressant au multiplicateur (44) qui le multiplie par le signal (T) délivré par la commande de temps (42), le produit obtenu étant envoyé au comparateur (45) qui le compare à au moins une valeur limite stockée dans la mémoire.

# FIG.1

EP 0 482 153 B1

FIG.2

FIG.3

FIG.4

FIG.5

FIG.6